Europäisches Patentamt

European Patent Office

Office européen des brevets

(11) Veröffentlichungsnummer: **0 482 374 A1**

## EUROPÄISCHE PATENTANMELDUNG

(21) Anmeldenummer: **91116391.3**

(22) Anmeldetag: **26.09.91**

(51) Int. Cl.5: **B60T 8/00**, B60T 13/68

(30) Priorität: **24.10.90 DE 4033767**

(43) Veröffentlichungstag der Anmeldung:
**29.04.92 Patentblatt 92/18**

(84) Benannte Vertragsstaaten:
**DE GB IT SE**

(71) Anmelder: **ROBERT BOSCH GMBH**
**Postfach 30 02 20**
**W-7000 Stuttgart 30(DE)**

(72) Erfinder: **Wrede, Jürgen, Dipl.-Ing.**
**Seeschwalbenweg 1**
**W-7000 Stuttgart 50(DE)**

(54) **Elektro-pneumatische Bremsanlage.**

(57) Es wird eine elektro-pneumatische Bremsanlage vorgeschlagen, bei der ein elektronisches Steuergerät (2) nicht nur zum bremswertgeberabhängigen Ansteuern von den Bremszylindern (5, 6) vorgeordneten Drucksteuerventilen (3, 4) bestimmt ist, sondern auch Signale eines Lenkradmomentsensors (19) verarbeitet, um diese beim bremsbewirkten Ansteuern der Drucksteuerventile (3, 4) zwecks Ausregelung der Lenkmomente mit zu berücksichtigen. Der Lenkradmomentsensor (19) kann entweder in der Lenkradwelle (17) oder an einer anderen Stelle der Lenkkraftübertragung angeordnet sein. Die elektro-pneumatische Bremsanlage ist bestimmt für Nutzkraftfahrzeuge und Busse.

## Stand der Technik

Die Erfindung bezieht sich auf eine elektro-pneumatische Bremsanlage nach der Gattung des Hauptanspruchs. Eine derartige Bremsanlage ist bekannt (DE-OS 3 617 356).

Bei solchen Bremsanlagen wird bei Einzelradregulierung für jedes Fahrzeugrad eine individuelle Druckregelung durchgeführt. Es ist deshalb auch für jedes Fahrzeugrad ein eigenes, dem Rad-bremszylinder vorgeordnetes Drucksteuerventil vor-gesehen. Da dann aber für die beiden links und rechts angeordneten Fahrzeugräder getrennte Regelkreise vorliegen, können die Drücke in den beiden Regelkreisen unterschiedlich sein.

Außerdem kann z. B. durch unterschiedliche Reibwerte in den Radbremsen links und rechts ein Schiefziehen der Bremsen auftreten.

## Vorteile der Erfindung

Die eingangs genannte elektro-pneumatische Bremsanlage mit den kennzeichnenden Merkmalen des Hauptanspruchs hat demgegenüber den Vorteil, daß die durch die Einzelradregelung mögli-chen, unterschiedlichen Bremsdrücke zum Verhin-dern des Schiefziehens, insbesondere an der Vorderachse verwendet werden. Des weiteren ist von Vorteil, daß die Arbeit einer Blockierschutzeinrich-tung bei μ-split (bei unterschiedlicher Fahrbahnbe-schaffenheit links und rechts) verbessert wird.

Weiter ist es vorteilhaft, daß der Einbau des Lenksensors an der Lenkwelle keine Probleme bezüglich einer Temperaturbelastung, wie sie bei einem Einbau unmittelbar an den Radbremsen zu berücksichtigen wäre, mit sich bringt.

Desweiteren ist es aus der Sicht des Bremsenfachmannes auch von Vorteil, daß zu einer zusätzlichen Lenkmomentsensierung nur ein einziger zusätzlicher Sensor notwendig ist; bei einer Brems-momentsensierung würden zwei Sensoren ge-braucht. Schließlich entstehen auch noch Vorteile dadurch, daß bei zu großen Giermomenten und bei einer Not- bzw. Fehlfunktion einer Radbremse der Fahrer eine Warnung erhält.

Weitere Vorteile der Erfindung ergeben sich aus der Beschreibung und aus den Ansprüchen.

## Zeichnung

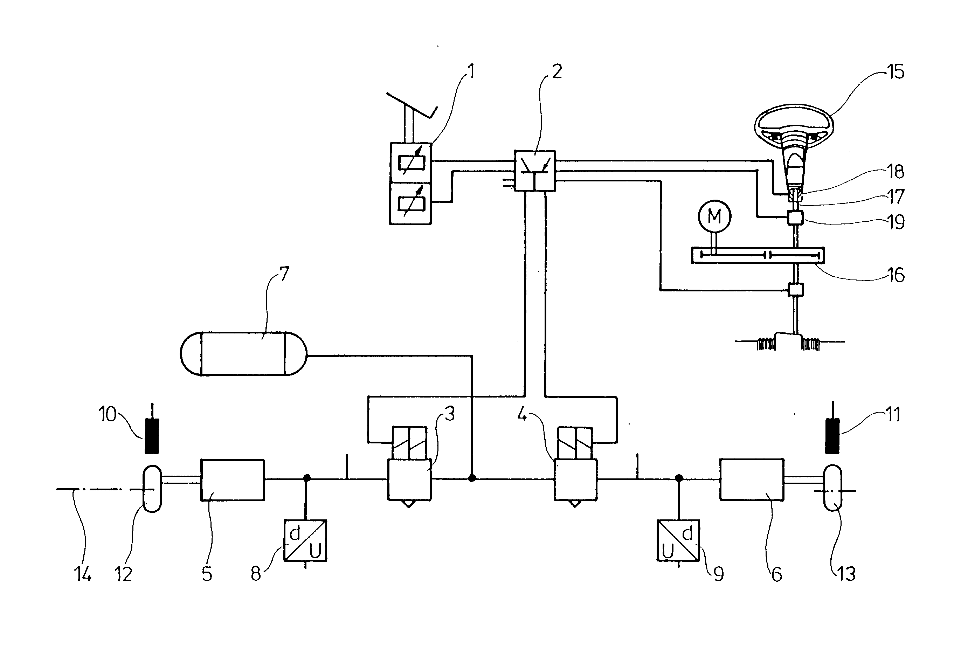

Ein Ausführungsbeispiel der Erfindung ist in der Zeichnung dargestellt und in der nachfolgenden Beschreibung näher erläutert.

## Beschreibung des Ausführungsbeispiels

Ein Nutzkraftfahrzeug (Lastwagen oder Bus) hat eine elektro-pneumatische Bremsanlage mit einem fußbetätigten Bremswertgeber 1, der zum Bremsen elektrische Signale in die Bremsanlage gibt. Diese Signale werden in der Bremsanlage in einem elektronischen Steuergerät 2 und in Drucksteuerventilen 3 und 4 so verarbeitet, daß nachgeschaltete Bremszylinder 5 und 6 mittelbar oder unmittelbar aus einem Vorratsbehälter 7 mit Druckluft beschickbar sind. An den Bremszylindern 5 und 6 sind Drucksensoren 8 und 9 angeordnet, die ihre jeweiligen Signale an das Steuergerät 2 abgeben. Ein Teil der dazu notwendigen Leitungsverbindungen wurde zum Zwecke der Übersichtlichkeit in der Zeichnung weggelassen. Die Bremsanlage ist außerdem noch mit einer Blockierschutzeinrichtung versehen, die mit Radsensoren 10 und 11 das Druckverhalten von Fahrzeugrädern 12 und 13 erfaßt. Diese Art der Bremsbestückung ist in der Zeichnung nur für eine Vorderachse eines Fahrzeugs dargestellt. Das Fahrzeug hat ein Lenkrad 15, mit dem über ein Lenkgetriebe 16 die Räder 12 und 13 der Vorderachse 14 zu lenken sind. In einer vom Lenkrad 15 verdrehbaren Lenkwelle 17 sind ein Lenkradstellungs- oder Lenkwinkel-Sensor 18 und ein Lenkradmomenten-sensor 19 angeordnet, die ihre Signale an das elektronische Steuergerät 2 geben. Ein Servomotor 20 sorgt für die Lenkhilfskraft.

## Wirkungsweise

Wenn das Fahrzeug geradeaus fährt und der Fahrer die Bremsen durch Niederdrücken des Pedals des Bremswertgebers 1 betätigt, dann wird das Steuergerät 2 mit einem Signal des Bremswertgebers 1 beschickt. Außerdem melden die Radsensoren 10 und 11 gleiche Drehzahlen an den Rädern 12 und 13. Die Raddrehzahl-Signale werden mit dem Signal des Lenkwinkel-Sensors (Winkel = 0°) verknüpft. In diesem Fall sollte normalerweise das Signal vom Lenkradmomenten-Sensor 19 Null sein bzw. innerhalb eines zulässigen Grenzwertes liegen.

Wird aber dieser Grenzwert überschritten, so wird im elektronischen Steuergerät 2 in Abhängigkeit von der Größe des Signals vom Lenkradmomenten-Sensor 19 und in Abhängigkeit von der Richtung, hervorgerufen durch stärkeres Bremsen des linken oder des rechten Rades 12 oder 13, ein Korrekturwert für die Drucksteuerventile 3 und 4 und damit für die Radbremsen der Vorderachse 14 vom Steuergerät 2 ausgegeben.

Bremst z. B. das linke Rad 12 bei gleichen Bremszylinderdrücken in den Bremszylindern 5 und 6 mehr als das rechte Rad 13 aufgrund eines höheren Bremsbelag-Reibwertes oder aufgrund eines niedrigeren Ansprechdruckes, so wird der Bremsdruck im Bremszylinder 6 des rechten Rades 13 erhöht und/oder der Bremsdruck im Bremszylinder 5 des linken Rades 12 abgesenkt, bis der Lenkradmomenten-Sensor 19 wieder einen Wert unterhalb des festgelegten Grenzwertes angibt.

Da der dieserart erstellte Korrekturdruck für verschiedene, vom Fahrer mit dem Bremswertgeber 1 als Sollwert-Geber ausgegebene Drücke unterschiedlich sein kann, lassen sich diese Korrekturdrücke in Tabellen- oder Gleichungsform im Steuergerät 2 abspeichern und bei der nächsten Bremsung in Abhängigkeit vom Bremsdruck-Sollwert im vorhinein einsteuern.

Bei Kurvenfahrt kann der bei Geradeausfahrt ermittelte Korrekturdruck beibehalten werden. Außerdem kann im elektronischen Steuergerät 2 ein weiterer Grenzwert für das Lenkrad-Moment abgespeichert werden, der bei seiner Überschreitung zu einem Warnsignal oder einer Notreaktion des Fahrzeugs führt. Grund für einen solchen Fehler kann beispielsweise ein verölter Bremsbelag sein.

Bei der beschriebenen Einzelregelung des Bremsdruckes für jedes Fahrzeugrad 12 bzw. 13 besteht, wie üblicherweise bei einer Einzelradregelung, die Gefahr, daß bei einem Fehler im elektronischen Steuergerät 2 oder am Drucksensor 8 bzw. 9 oder im Drucksteuerventil 3 bzw. 4 nur ein Rad 12 oder 13 gebremst wird. Dabei kann entweder ein Rad 12 oder 13 ungewollt bremsen, oder es kann ein Rad 12 oder 13 eventuell gar nicht bremsen. Dann tritt - eventuell sogar unvermittelt - ein großes Lenkradmoment auf. Ein solches Moment kann aber vom Fahrer nicht beherrscht werden und stellt ein hohes Sicherheitsrisiko dar.

Mit dem erfindungsgemäß vorgesehenen, mit der Bremsanlage verknüpften Lenkradmomenten-Sensor 19 wird nun die Möglichkeit eröffnet, beim Auftreten eines derart großen Lenkradmomentes über das Steuergerät 2 Notfunktionen auszulösen. So können z. B. an der Vorderachse 14 die Bremszylinder 5 und 6 beide entlüftet werden, oder es kann der Bremszylinderdruck zumindest so weit abgesenkt werden, daß das Fahrzeug mit seiner Lenkung beherrschbar bleibt.

Bei einer Arbeit des Blockierschutzes auf ungleicher Fahrbahn links und rechts (μ-split) tritt ebenfalls ein Lenkradmoment auf, das der Lenkradmomenten-Sensor 19 an das elektronische Steuergerät 2 meldet. Mit Hilfe dieses Signals des Sensors 19 kann das elektronische Steuergerät 2 in die Blockierschutz-Regelung eingreifen und den optimalen Kompromiß zwischen Giermoment-Abschwächung und kurzem Bremsweg finden.

Bei der in der Patentzeichnung dargestellten elektronischen, mittels Elektromotor betriebenen Servolenkung sind Lenkradmoment-Sensoren zum Einleiten der Servokraft durchaus üblich und stellen an sich keine Erfindung dar. Es ist hier aber darauf hinzuweisen, daß z. B. durch die Verwendung einer Signalverbindung zwischen dem elektronischen Steuergerät für die elektronische Servolenkung und dem elektronischen Steuergerät 2 für die Bremsanlage die erfindungsgemäße Bremsanlage ebenfalls verwirklicht werden kann.

Der Kern der Erfindung besteht darin, daß ein Lenkmomenten-Sensor derart mit einer elektronisch geregelten, elektro-pneumatischen Bremsanlage mit Einzelradregelung verbunden wird, daß Lenkradmomente beim Bremsen ausgeregelt und gefährlich große Lenkmomente vermieden werden.

Abschließend wird darauf hingewiesen, daß die Ansprüche und insbesondere der Hauptanspruch Formulierungsversuche der Erfindung ohne umfassende Kenntnis des Stands der Technik und daher ohne einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in den Ansprüchen niederzulegen sowie den Hauptanspruch in seinem Merkmalsgehalt zu reduzieren.

**Patentansprüche**

1. Elektro-pneumatische Bremsanlage mit einem elektrischen Bremswertgeber sowie mit mindestens einem mit einem elektronischen Steuergerät ausgerüsteten elektrischen Steuerkreis, über den ein, jedem Bremszylinder vorgeordnetes Drucksteuerventil ansteuerbar ist, das beim Bremsen Druckluft aus einem Vorratsbehälter in den Bremszylinder und beim Bremslösen zur Außenluft gelangen läßt, dadurch gekennzeichnet, daß das elektronische Steuergerät (2) außer zur Brems-Signalverarbeitung auch noch für die Signalverarbeitung von Sensorsignalen eines Lenksystems ausgerüstet ist und daß die Lenksensorsignale beim bremsbewirkten Ansteuern der Drucksteuerventile zwecks Ausregeln der Lenkmomente mit berücksichtigt werden.

2. Elektro-pneumatische Bremsanlage nach Anspruch 1, dadurch gekennzeichnet, daß das elektronische Steuergerät (2) bei zu großen Giermomenten mit Hilfe der Lenksensorsignale ein Warnsignal emittiert.

3. Elektro-pneumatische Bremsanlage nach Anspruch 1 oder 2, dadurch gekennzeichnet, daß das elektronische Steuergerät (2) bei einseitigem und schiefziehendem Bremsen mit Hilfe der Lenksensorsignale ein Warnsignal emittiert.

4. Elektro-pneumatische Bremsanlage nach einem der Ansprüche 1 bis 3, dadurch gekennzeichnet, daß das elektronische Steuergerät (2) außer mit den Bremssignalen mit den Sensorsignalen eines einzigen Lenksensors beschickbar ist.

5. Elektro-pneumatische Bremsanlage nach Anspruch 4, dadurch gekennzeichnet, daß der Lenksensor ein Lenkradmomentsensor (19) ist.

6. Elektro-pneumatische Bremsanlage nach Anspruch 4, dadurch gekennzeichnet, daß der Lenksensor ein Lenkwinkelsensor (18) ist.

# Europäisches Patentamt

## EUROPÄISCHER RECHERCHENBERICHT

Nummer der Anmeldung

**EP 91 11 6391**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 256 283   (BOSCH) <br> * Figur 5 * <br> – – – | 1,2,4-6 | B 60 T 8/00 <br> B 60 T 13/68 |
| Y | DE-A-3 518 221   (NISSAN) <br> * das ganze Dokument * <br> – – – | 1,4,6 | |
| Y | DE-C-3 922 528   (DAIMLER-BENZ) <br> * Spalte 6, Zeile 45 - Spalte 7, Zeile 67; Figuren 1, 2 * <br> – – – | 1,4,5 | |
| Y | EP-A-0 323 066   (FORD) <br> * Spalte 9, Zeilen 5 - 9 * <br> – – – – – | 1,2 | |

**RECHERCHIERTE SACHGEBIETE (Int. Cl.5)**

B 60 T
B 60 K

Der vorliegende Recherchenbericht wurde für alle Patentansprüche erstellt

| Recherchenort | Abschlußdatum der Recherche | Prüfer |
|---|---|---|
| Berlin | 03 Januar 92 | BLURTON M D |